# EUROPEAN PATENT APPLICATION

(11) **EP 4 410 800 A1**
(43) Date of publication of application: **07.08.2024**
(21) Application number: 22876526.9
(22) Date of filing: 30.09.2022
(51) Int. Cl.: C07F 9/40

(54) **METHOD FOR PRODUCING VINYLPHOSPHONIC ACID MONOESTER**

(30) Priority: 01.10.2021 JP 2021163048
(71) Applicant: University of Fukui, Fukui-shi, Fukui 910-8507 (JP); Maruzen Petrochemical Co., Ltd., Tokyo 104-8502 (JP)
(72) Inventor: SUGIHARA Shinji, Fukui-shi, Fukui 910-8507 (JP); YAMAZAKI Tadashi, Ichihara-shi, Chiba 290-8503 (JP)
(74) Representative: Regimbeau
(86) International application number: PCT/JP2022/036648
(87) International publication number: WO 2023/054663

(57) **Abstract**

Provided is a method for producing a vinylphosphonic acid monoester from vinylphosphonic acid diester with high selectivity. The method for producing a vinylphosphonic acid monoester from a vinylphosphonic acid diester represented by the following Formula (1): 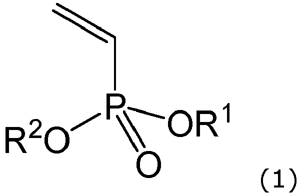 wherein R¹ and R² each independently denote a linear or branched alkyl group having from 1 to 4 carbon atoms,
the vinylphosphonic acid monoester being represented by the following Formula (2): 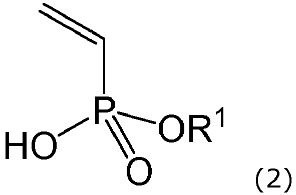 wherein R¹ denotes a linear or branched alkyl group having from 1 to 4 carbon atoms, according to the invention, wherein the method includes a step of heating the vinylphosphonic acid diester in the presence of a solvent and a basic substance, thereby obtaining the vinylphosphonic acid monoester, and a molar ratio of the basic substance to the vinylphosphonic acid diester is from 0.7 to 3.5.

## Description

### BACKGROUND OF THE INVENTION

### Technical Field

The present invention relates to a method for producing a vinylphosphonic acid monoester.

### Background Art

Organophosphorus compounds are chemical substances that are widely used in various products, such as flame retardants, plasticizers, insecticides, medicines, agrochemicals, and ligands for metal complexes. In recent years, organic phosphorus compounds have attracted particular industrial attention as functional materials in the fields of metal surface treatment agents, constituent materials such as flame-retardant resins, and electronic materials.

Among organic phosphorus compounds, phosphonic acid derivatives are useful precursor substances for the various chemical substances mentioned above, and therefore various production methods have been investigated. For example, Patent Literature 1 discloses various methods for producing phosphonic acid diester derivatives. One of the methods described is a method for obtaining methyl vinylphosphonate using strongly acidic cation exchange resin after reacting dimethyl vinylphosphonate with sodium iodide to obtain a methyl vinylphosphonate sodium salt.

### Citation List

### Patent Literature

Patent Literature 1: Japanese Patent Application Laid-Open No. 2012-116776

### SUMMARY OF INVENTION

### Technical Problem

However, the method for obtaining methyl vinylphosphonate described in Patent Literature 1 was a complicated two-step synthesis method via a methyl vinylphosphonate sodium salt. Therefore, the development of an efficient method for producing a vinylphosphonic acid monoester is still desired.

Accordingly, an object of the present invention is to provide a method for producing a vinylphosphonic acid monoester from a vinylphosphonic acid diester conveniently with high selectivity.

### Solution to Problem

As a result of intensive studies to solve the above-described problem, the present inventors found that the problem can be solved by allowing a vinylphosphonic acid diester to react in the presence of a specific amount of a basic substance under heating. This has led to the completion of the present invention.

In other words, according to the present invention, the following inventions are provided.
[1] A method for producing a vinylphosphonic acid monoester from a vinylphosphonic acid diester represented by the following Formula (1): 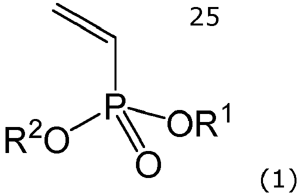 wherein R¹ and R² each independently denote a linear or branched alkyl group having from 1 to 4 carbon atoms,
   the vinylphosphonic acid monoester being represented by the following Formula (2): 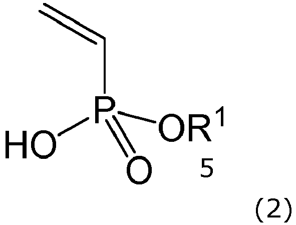 wherein R¹ denotes a linear or branched alkyl group having from 1 to 4 carbon atoms,
   wherein the method comprises a step of heating the vinylphosphonic acid diester in the presence of a solvent and a basic substance, thereby obtaining the vinylphosphonic acid monoester, and
   a molar ratio of the basic substance to the vinylphosphonic acid diester is from 0.7 to 3.5.
[2] The production method according to [1], wherein selectivity of the vinylphosphonic acid monoester is 80% or more.
[3] The production method according to [1] or [2], wherein the basic substance is at least one selected from the group consisting of alkaline metal hydroxides, carbonates, and hydrogencarbonates, and alkaline earth metal hydroxides, carbonates, and hydrogencarbonates.
[4] The production method according to [1] or [3], wherein the solvent contains water.
[5] The production method according to [1] or [4], wherein pH of a reaction solution is from 11 to 14.
[6] The production method according to [1] or [5], wherein a reaction temperature is from 50°C to 90°C.
[7] The production method according to any one of [1] to [6], wherein the vinylphosphonic acid monoester is at least one selected from the group consisting of methyl vinylphosphonate, ethyl vinylphosphonate, n-propyl vinylphosphonate, and isopropyl vinylphosphonate.

### Advantageous Effects of Invention

According to the present invention, a method for producing a vinylphosphonic acid monoester from vinylphosphonic acid diester with high selectivity can be provided.

### BRIEF DESCRIPTION OF DRAWING

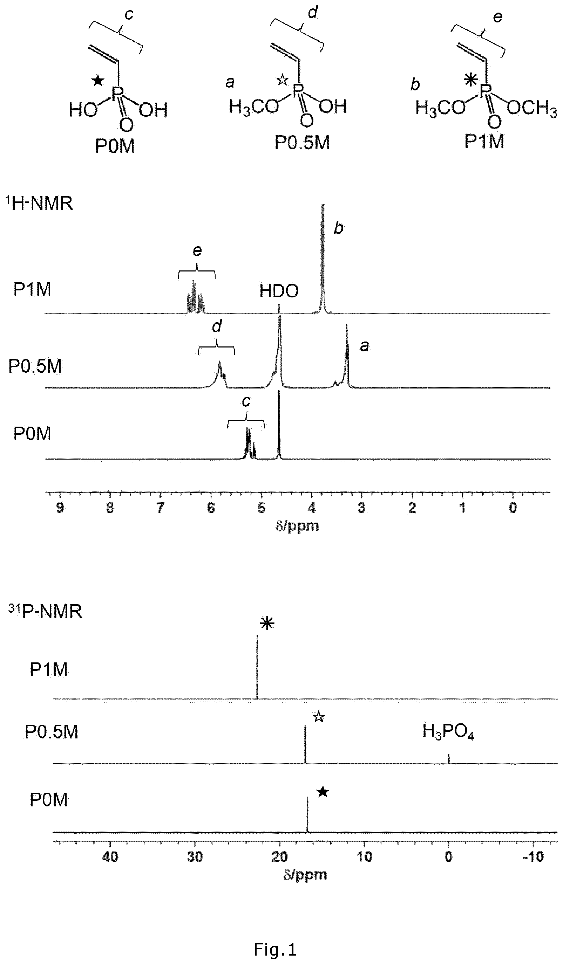

FIG. 1 shows the results of analyzing dimethyl vinylphosphonate (P1M), methyl vinylphosphonate (P0.5M), and vinylphosphonic acid (POM) by ¹H-NMR and ³¹P-NMR.

### DESCRIPTION OF EMBODIMENTS

### [Method for Producing Vinylphosphonic Acid Monoester]

The production method of the present invention is a method for producing a vinylphosphonic acid monoester from a vinylphosphonic acid diester represented by the following Formula (1): 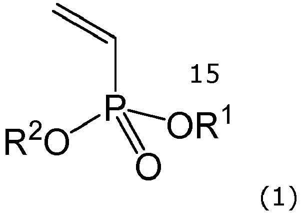 wherein R¹ and R² each independently denote a linear or branched alkyl group having from 1 to 4 carbon atoms,
the vinylphosphonic acid monoester being represented by the following Formula (2): 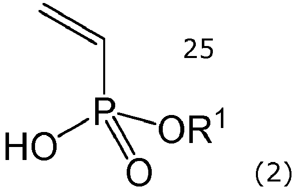 wherein R¹ denotes a linear or branched alkyl group having from 1 to 4 carbon atoms.

In Formulas (1) and (2) above, the alkyl groups of R¹ and R² have from 1 to 4 carbon atoms, preferably from 1 to 3 carbon atoms, more preferably from 1 to 2 carbon atoms. For example, examples of R¹ and R² include a methyl group, an ethyl group, an n-propyl group, an isopropyl group, an n-butyl group, an isobutyl group, and a sec-butyl group. Of these, a methyl group, an ethyl group, an n-propyl group, and an isopropyl group are preferable, a methyl group and an ethyl group are more preferable, and a methyl group is still more preferable.

Examples of the vinylphosphonic acid diester represented by Formula (1) above serving as a raw material for the above-described reaction include dimethyl vinylphosphonate, diethyl vinylphosphonate, din-propyl vinylphosphonate, diisopropyl vinylphosphonate, di-n-butyl vinylphosphonate, diisobutyl vinylphosphonate, and di-sec-butyl vinylphosphonate. Of these, dimethyl vinylphosphonate, diethyl vinylphosphonate, di-n-propyl vinylphosphonate, and diisopropyl vinylphosphonate are preferable, dimethyl vinylphosphonate and diethyl vinylphosphonate are more preferable, and dimethyl vinylphosphonate is still more preferable.

Examples of the vinylphosphonic acid monoester represented by Formula (2) above serving as a target substance for the above-described reaction include methyl vinylphosphonate, ethyl vinylphosphonate, n-propyl vinylphosphonate, isopropyl vinylphosphonate, n-butyl vinylphosphonate, isobutyl vinylphosphonate, and sec-butyl vinylphosphonate. Of these, methyl vinylphosphonate, ethyl vinylphosphonate, n-propyl vinylphosphonate, and isopropyl vinylphosphonate are preferable, methyl vinylphosphonate and ethyl vinylphosphonate are more preferable, and methyl vinylphosphonate is still more preferable.

### (Heating Reaction Step)

The production method of the present invention comprises a step of heating the vinylphosphonic acid diester represented by Formula (1) above in the presence of a solvent and a basic substance, thereby obtaining the vinylphosphonic acid monoester represented by Formula (2) above.

The basic substance is not particularly limited. Both inorganic and organic compounds can be used. Basic substances may be used singly or in a combination of two or more.

Examples of inorganic compounds include: alkaline metal hydroxides, carbonates, and hydrogencarbonates; alkaline earth metal hydroxides, carbonates, and hydrogencarbonates; and ammonia. Examples of alkaline metal hydroxides include potassium hydroxide and sodium hydroxide. Examples of alkaline metal carbonates include sodium carbonate and potassium carbonate. Examples of alkaline metal hydrogencarbonates include sodium hydrogencarbonate and potassium hydrogencarbonate. Examples of alkaline earth metal hydroxides include calcium hydroxide and magnesium hydroxide. Examples of alkaline earth metal carbonates include calcium carbonate. Examples of alkaline earth metal hydrogencarbonates include calcium hydrogencarbonate. Examples of organic compounds include amine compounds. Of these, alkaline metal hydroxides, carbonates, and hydrogencarbonates, and alkaline earth metal hydroxides, carbonates, and hydrogencarbonates are preferable, and alkaline metal hydroxides are more preferable.

The amount of the basic substance added is from 0.7 to 3.5, preferably from 0.75 to 3.0, more preferably from 0.8 to 2.5 in terms of the molar ratio to the vinylphosphonic acid diester. As long as the amount of the basic substance added is within the above-described range, it is possible to produce a vinylphosphonic acid monoester from a vinylphosphonic acid diester with high selectivity.

The temperature of the above-described reaction is preferably from 50°C to 90°C, more preferably from 55°C to 85°C, still more preferably from 60°C to 80°C considering reaction efficiency, reaction rate, and by-products. As long as the reaction temperature is within the above-described range, it is possible to progress the reaction sufficiently and improve the selectivity of vinylphosphonic acid monoester from vinylphosphonic acid diester.

The reaction time is not particularly limited; however, it is preferably from 1 to 100 hours, more preferably from 3 to 75 hours, still more preferably from 5 to 50 hours considering reaction efficiency, reaction rate, and by-products. As long as the reaction time is within the above-described range, it is possible to progress the reaction sufficiently and improve the selectivity of vinylphosphonic acid monoester from vinylphosphonic acid diester.

It is preferable to use a solvent containing water as the solvent for the reaction described above.

The pH of the reaction solution is preferably from 11 to 14, more preferably from 11.5 to 14, still more preferably from 12 to 14. As long as the pH of the reaction solution is within the above-described range, it is possible to improve the selectivity of vinylphosphonic acid monoester from vinylphosphonic acid diester.

The selectivity of vinylphosphonic acid monoester in the above-described reaction is preferably 80% or more, more preferably 90% or more, still more preferably 95% or more, even still more preferably 98% or more.

"Selectivity" refers to the molar ratio of the produced vinylphosphonic acid monoester to vinylphosphonic acid diester before reaction.

### (Purification Step)

The production method of the present invention may further comprise a step of purifying the vinylphosphonic acid monoester obtained in the above-described heating reaction step. The purification means is not particularly limited, and conventionally known purification means can be used in combination. Examples of the purification means include neutralization, solvent extraction, water washing, liquid separation, solvent distillation, and reprecipitation.

### EXAMPLES

The present invention will be specifically explained below with reference to Examples and Comparative Examples; however, the present invention is not limited to these Examples.

The composition and target substance selectivity were analyzed using the following method for the reaction products obtained in the Examples and Comparative Examples described below.
(1) The composition of each reaction product was analyzed using NMR under the conditions described below.

### (¹H-NMR Conditions)

¹H-NMR was measured by dissolving a sample in heavy water using JNM-ECX500II (500 MHz) manufactured by JEOL Ltd.

### (³¹P-NMR Conditions)

³¹P-NMR was measured by dissolving a sample in heavy water and adding H₃PO₄ to an internal standard using JNM-ECX500II (202 MHz) manufactured by JEOL Ltd.

Specifically, the components of dimethyl vinylphosphonate (P1M), methyl vinylphosphonate (P0.5M), and vinylphosphonic acid (POM) were each analyzed by ¹H-NMR and ³¹P-NMR.The results of analysis by ¹H-NMR and ³¹P-NMR are shown in FIG. 1. The compositional ratio (molar ratio) of dimethyl vinylphosphonate (P1M), methyl vinylphosphonate (P0.5M), and vinylphosphonic acid (POM) was determined from the differences in chemical shifts and their integral ratios shown in FIG. 1.

(2) "Selectivity" refers to the molar ratio of the amount of the produced methyl vinylphosphonate (P0.5M) to dimethyl vinylphosphonate (P1M) before reaction. The selectivity was calculated based on the composition analysis results described above.

### (Production Example of Dimethyl Vinylphosphonate)

Into a 1-L three-necked flask, 3.71 g of nickel chloride, 2.18 g of zinc, and 30.3 g of triphenylphosphine were weighed, and the inside of the flask was purged with nitrogen. Toluene in an amount of 42.0 g was added thereto, and the mixture was heated and stirred at 95°C for 6 hours, thereby obtaining a mixture of a nickel complex and a low polarity additive.

Next, 21.0 g of zinc chloride and the total volume of the mixture of a nickel complex and a low polar additive obtained above as a catalyst were added to 420 g of dimethyl phosphite, and acetylene gas was blown into the mixture. As a result, the reaction temperature varied from 25°C to 28°C, and 3.19 mol of gas was absorbed over 660 minutes. Thus, crude dimethyl vinylphosphonate was obtained. This crude product was distilled under reduced pressure at a vacuum degree of 1.0 kPa, and 285 g of a fraction having a boiling point of from 60°C to 63°C was collected. Thus, dimethyl vinylphosphonate was obtained.

### <Production Example of Methyl Vinylphosphonate>

### [Example 1]

Into an eggplant flask, 8.04 g (0.059 mol) of dimethyl vinylphosphonate obtained in the above-described synthesis example (referred to as "P1M"), 1.96 g (0.049 mol) of sodium hydroxide, and 90 g of water were added. The mixture was reacted at 60°C for 24 hours, thereby obtaining a reaction product. The pH of the reaction solution was 11.3.

Subsequently, hydrochloric acid was added to the aqueous solution containing this reaction product to adjust the pH of the reaction solution to 7, followed by washing three times with 100 mL of ethyl acetate using a separatory funnel. The aqueous solution was then purified by evaporating water. As a result of the NMR analysis of the obtained reaction product, it was confirmed that the monoester (P0.5M) was 100%.

### [Example 2]

The reaction was carried out in the same manner as in Example 1 to obtain a reaction product except that the amount of sodium hydroxide added was changed to 2.36 g (0.059 mol). The pH of the reaction solution was 14.

Subsequently, the reaction product was purified in the same manner as in Example 1. As a result of the NMR analysis of the obtained reaction product, it was confirmed that the monoester (P0.5M) was 100%.

### [Example 3]

The reaction was carried out in the same manner as in Example 1 to obtain a reaction product except that the amount of sodium hydroxide added was changed to 4.72 g (0.118 mol). The pH of the reaction solution was 14.

Subsequently, the reaction product was purified in the same manner as in Example 1. As a result of the NMR analysis of the obtained reaction product, it was confirmed that the monoester (P0.5M) was 100%.

### [Comparative Example 1]

The reaction was carried out in the same manner as in Example 1 to obtain a reaction product except that the amount of sodium hydroxide added was changed to 1.18 g (0.0295 mol). The pH of the reaction solution was 2.

Subsequently, the reaction product was purified in the same manner as in Example 1. As a result of analyzing the obtained reaction product by NMR, it was confirmed that the reaction product was a mixture of 37% of the diester (P1M) and 63% (molar ratio) of the monoester (P0.5M).

### [Comparative Example 2]

The reaction was carried out in the same manner as in Example 1 to obtain a reaction product except that the amount of sodium hydroxide added was changed to 9.44 g (0.236 mol). The pH of the reaction solution was 14.

Subsequently, the reaction product was purified in the same manner as in Example 1. As a result of analyzing the obtained reaction product by NMR, it was confirmed that the reaction product was a mixture of 71% of the monoester (P0.5M) and 29% (molar ratio) of vinylphosphonic acid (POM).

Table 1 lists the results of Examples 1 to 3 and Comparative Examples 1 to 2 above.

**[Table 1]**

| | Dimethyl vinylphosphonate | | Basic substance | | | pH of reaction solution | Composition of reaction product | | | Reaction selectivity (%) |
|---|---|---|---|---|---|---|---|---|---|---|
| | Type | Amount added (mol) | Type | Amount added (mol) | Molar ratio ([NaOH]/[P1M]) | | P1M | P0.5M | P0M | |
| Example 1 | P1M | 0.059 | NaOH | 0.049 | 0.8 | 11.3 | 0 | 100 | 0 | 100 |
| Example 2 | P1M | 0.059 | NaOH | 0.059 | 1.0 | 14 | 0 | 100 | 0 | 100 |
| Example 3 | P1M | 0.059 | NaOH | 0.118 | 2.0 | 14 | 0 | 100 | 0 | 100 |
| Comparative Example 1 | P1M | 0.059 | NaOH | 0.0295 | 0.5 | 2 | 37 | 63 | 0 | 63 |
| Comparative Example 2 | P1M | 0.059 | NaOH | 0.236 | 4 | 14 | 0 | 71 | 29 | 71 |

## Claims

1. A method for producing a vinylphosphonic acid monoester from a vinylphosphonic acid diester represented by the following Formula (1): 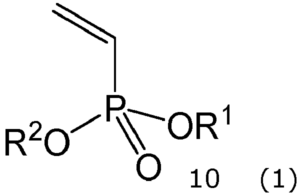 wherein R¹ and R² each independently denote a linear or branched alkyl group having from 1 to 4 carbon atoms,
the vinylphosphonic acid monoester being represented by the following Formula (2): 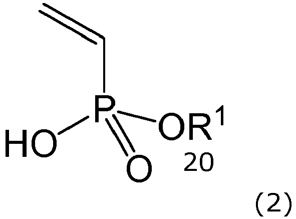 wherein R¹ denotes a linear or branched alkyl group having from 1 to 4 carbon atoms,
wherein the method comprises a step of heating the vinylphosphonic acid diester in the presence of a solvent and a basic substance, thereby obtaining the vinylphosphonic acid monoester, and
a molar ratio of the basic substance to the vinylphosphonic acid diester is from 0.7 to 3.5.

2. The production method according to claim 1, wherein selectivity of the vinylphosphonic acid monoester is 80% or more.

3. The production method according to claim 1 or 2, wherein the basic substance is at least one selected from the group consisting of alkaline metal hydroxides, carbonates, and hydrogencarbonates, and alkaline earth metal hydroxides, carbonates, and hydrogencarbonates.

4. The production method according to claim 1 or 2, wherein the solvent contains water.

5. The production method according to claim 1 or 2, wherein pH of a reaction solution is from 11 to 14.

6. The production method according to claim 1 or 2, wherein a reaction temperature is from 50°C to 90°C.

7. The production method according to claim 1 or 2, wherein the vinylphosphonic acid monoester is at least one selected from the group consisting of dimethyl vinylphosphonate, diethyl vinylphosphonate, di-n-propyl vinylphosphonate, and diisopropyl vinylphosphonate.
